# EUROPEAN PATENT SPECIFICATION

(11) **EP 2 751 671 B1**
(45) Date of publication and mention of the grant of the patent: **16.08.2017**
(21) Application number: 12816376.3
(22) Date of filing: 28.11.2012
(51) Int. Cl.: G06F 9/38, G06F 15/80

(54) **DIGITAL SIGNAL PROCESSOR AND BASEBAND COMMUNICATION DEVICE**
DIGITALER SIGNALPROZESSOR UND BASISBANDKOMMUNIKATIONSVORRICHTUNG
PROCESSEUR DE SIGNAL NUMÉRIQUE ET DISPOSITIF DE COMMUNICATION EN BANDE DE BASE

(30) Priority: 20.12.2011 SE 1151231
(43) Date of publication of application: 09.07.2014
(73) Proprietor: MediaTek Sweden AB, 583 30 Linköping (SE)
(72) Inventor: NILSSON, Anders, S-58247 Linköping (SE); TELL, Eric, S-583 31 Linköping (SE)
(74) Representative: Fenix Legal KB
(86) International application number: PCT/SE2012/051321
(87) International publication number: WO 2013/095258

(56) References cited:
- WO-A2-2005/103888
- WO-A2-2008/037715
- GB-A- 2 273 377
- US-A1- 2007 255 894

## Description

### Technical Field

The present invention relates to a digital signal processor (DSP), for example, a SIMT-based DSP.

### Background and Related Art

Many mobile communication devices use a radio transceiver that includes one or more digital signal processors (DSP).

For increased performance and reliability many mobile terminals presently use a type of DSP known as a baseband processor (BBP), for handling many of the signal processing functions associated with processing of the received the radio signal and preparing signals for transmission. It is advantageous to separate such functions from the main processor, as they are highly timing dependent, and may require a realtime operating system. There is a desire that such baseband processors should be as flexible as possible to adapt to developing standards and enable hardware reuse. Therefore, programmable baseband processors, PBBP have been developed.

Many of the functions frequently performed in such processors are performed on large numbers of data samples. Therefore a type of processor known as Single Instruction Multiple Data (SIMD) processor is useful because it enables one single instruction to operate on multiple data items, rather than on one data item at a time. Multiple data items may be arranged in a vector, and a processing unit suitable for operating on a vector of data will be referred to in this document as a vector execution unit.

As a further development of SIMD architecture, the Single Instruction stream Multiple Tasks (SIMT) architecture has been developed. Traditionally in the SIMT architecture one or two SIMD type vector execution units have been provided in association with an integer execution unit, which may be part of a core processor.

International Patent Application WO 2007/018467 discloses a DSP according to the SIMT architecture, having a processor core including an integer execution unit and a program memory, and two vector execution units which are connected to, but not integrated in the core. The vector execution units may be Complex Arithmetic Logic Units (CALU) or Complex Multiply-Accumulate Units (CMAC). The core has a program memory for distributing instructions to the execution units. In WO2007/018467 each of the vector execution units has a separate instruction decoder. This enables the use of the vector execution units independently of each other, and of other parts of the processor, in an efficient way.

### Summary of the Invention

It is an objective of the present invention to make a SIMT processor more flexible and enable more efficient use of the program memory, issue bandwidth and execution units.

This objective is achieved according to the present invention by a digital processor comprising:
- a processor core including an integer execution unit configured to execute integer instructions; and
- at least a first and a second vector execution unit separate from and coupled to the processor core said vector execution units having a first and a second number of datapaths, respectively, said vector execution units being arranged to execute instructions, including vector instructions that are to be performed on multiple data in the form of a vector;
- said digital signal processor comprising a program memory arranged to hold instructions for the first and second vector execution unit and issue logic for issuing instructions, including vector instructions, to the first and second vector execution unit.

The digital signal processor is characterized in that the processor comprises an issue control unit for selecting at least two execution units that are to receive and execute the same instruction at the same time, and logic for sending the instruction to said at least two execution units.

In the processor defined above, the same instruction may be used to control a number of execution units. This significantly reduces the control overhead when sending the same instruction to a number of execution units. It also enables parallel execution of the same instruction on a number of execution units. The possibility of starting several execution units at one time makes the handling of instructions very efficient. An execution unit may be a vector execution unit, a scalar execution unit or an integer execution unit. A scalar execution unit is arranged to process one data item at a time, but the data item may be an integer or a complex value. For example, the same vector instruction may be sent to two or more vector execution units to be performed on different sets of data. Examples of non-vector instructions that are often sent to more than one vector execution unit are *clear* and *star.* It is possible, for example, to have one issue group that includes all vector execution units.

In a preferred embodiment, each vector execution unit comprising a vector controller arranged to determine if an instruction is a vector instruction and, if it is, inform a count register arranged to hold the vector length, said vector controllers being further arranged to control the execution of instructions.

The processor may also comprise one or more accelerators, known in the art. The term functional unit, when used in this document, indicates either an execution unit or an accelerator.

Preferably, a number of issue groups are defined, each issue group comprising at least one of the execution units, and at least one issue group comprising more than one of the execution unit, and the issue control unit is arranged to select the at least two execution units by selecting an issue group. This may be hardcoded in the core.

Alternatively, in a preferred embodiment, the issue control unit further comprises at least one mask associated with at least one issue group, said mask indicating which execution unit or units in the issue group should receive and execute the instruction. This makes it possible to change the definition of issue groups and the selection of execution units for each issue group, making the processor more flexible.

An issue group may comprise at least one integer execution unit and/or at least one vector execution unit. An issue group may be defined to comprise only execution units of the same type, or a mix of execution units of different types, as desired. It may be suitable to define one issue group that includes all execution units, for example for issuing the command *clear*.

An instruction may involve reading data from and writing data to other units in the processor. When the same instruction is sent to a number of execution units in an issue group, normally each execution unit should work with its own set of other units to avoid several execution units trying to read from or write to the same unit. Therefore, in a preferred embodiment, at least one execution unit comprises a mapping table for translating information held in an instruction indicating at least one other unit with which the execution should interact, for example, from which memory it should read data. Still, two or more execution units may be arranged to receive data from the same memory unit or functional unit in the processor, for example when one execution unit in the issue group is to perform the function A=sum(X*Y), and another is to perform the function B=sum(X*Z), X, Y and Z being data vectors obtained from the other units in the processor.

One way of handling the result from an issue group involves writing the result from each execution unit in the issue group to the same vector register unit and letting the vector register unit perform the instructions involved in processing the result.

Preferably, the instruction decoder is arranged to inform the vector register unit about the instruction being executed at any given time.

The selection of which issue group is to perform a particular instruction may be handled in different ways. Normally, an issue signal will be extracted in the core and sent to the relevant execution unit. In this case, the at least one execution unit in an issue group is further arranged to receive an issue signal and to control the execution of instructions based on this issue signal. Alternatively, each vector execution unit may be arranged to extract an issue signal from a received instruction word and determine whether it should participate in the execution of the instruction word based on the issue signal.

Preferably, the vector controller controls the execution of instructions on the basis of an issue signal received from the core. Alternatively, the issue signal may be handled locally by the execution unit itself. How to implement this is known in the art.

Processing according to the invention is made more efficient by enabling concurrent processing of the one instruction on two different sets of data by two execution units. It would also be possible to let two execution units process different parts of the same set of data, provided the different parts were stored in different memories. This enables more efficient processing of large sets of data than what is enabled in the prior art, without having to implement larger vector execution units. As an alternative solution, the capacity of a vector execution unit could be increased by increasing the number of datapaths included in the vector execution unit, but such a high-capacity vector execution unit would be unnecessarily large for most commands, and therefore inefficient. Hence, the invention provides a more flexible and cost-efficient solution than providing a single vector execution unit with higher capacity

The distribution of instructions and data to and from several units in one go allows for extremely efficient handling of instructions since sending the same signal between several units can be achieved at practically the same cost as signaling between two units.

Typically, the program memory is arranged in the processor core and is also arranged to hold instructions for the integer execution unit.

The invention also relates to a baseband communication device suitable for multimode wired and wireless communication, comprising:
- A front-end unit configured to transmit and/or receive communication signals;
- A programmable digital signal processor coupled to the front-end unit, wherein the programmable digital signal processor is a digital signal processor according to the above.

In a preferred embodiment, the vector execution units referred to throughout this document are SIMD type vector execution units or programmable co-processors arranged to operate on vectors of data.

The processor according to embodiments of this invention are particularly useful for Digital Signal Processors, especially baseband processors. The front-end unit may be an analog front-end unit arranged to transmit and/or receive radio frequency or baseband signals.

Such processors are widely used in different types of communication device, such as mobile telephones, TV receivers and cable modems. Accordingly, the baseband communication device may be arranged for communication in a cellular communications network, for example as a mobile telephone or a mobile data communications device. The baseband communication device may also be arranged for communication according to other wireless standards, such as Bluetooth or WiFi. It may also be a television receiver, a cable modem, WiFI modem or any other type of communication device that is able to deliver a baseband signal to its processor. It should be understood that the term "baseband" only refers to the signal handled internally in the processor. The communication signals actually received and/or transmitted may be any suitable type of communication signals, received on wired or wireless connections. The communication signals are converted by a front-end unit of the device to a baseband signal, in a suitable way.

### Brief Description of the Drawings

In the following the invention will be described in more detail, by way of example, and with reference to the appended drawings.
Fig.1 is a block diagram of the baseband processor according to an embodiment of the invention.
Fig. 2 illustrates an instruction format that may be used to select a particular issue group.
Fig. 3 illustrates the instruction issue logic in a SIMT processor
Fig. 4A illustrates the issue logic functions
Fig. 4B illustrates a mask that may be used to specify issue groups
Fig. 5 is a diagram illustrating the instruction issue pipelines of one embodiment of the processor core of FIG. 2.
Fig. 6 illustrates a way of handling the idle signal in an issue group

### Detailed description of Embodiments

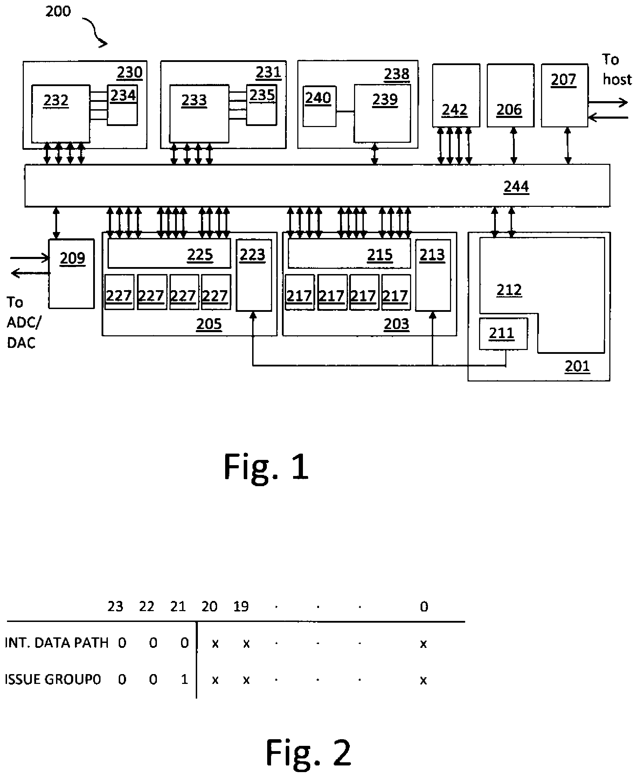

Figure 1 illustrates an example of a baseband processor 200 according to the SIMT architecture. The processor 200 includes a controller core 201 and a first 203 and a second 205 vector execution unit, which will be discussed in more detail below. A FEC unit 206 as discussed in Figure 1 is connected to the on-chip network. In a concrete implementation, of course, the FEC unit 206 may comprise several different units.

A host interface unit 207 provides connection to the host processor (not shown). If a MAC processor is present, it is connected between the host interface unit 207 and the host processor. A digital front end unit 209 provides connection to an ADC/DAC unit in a manner well known in the art.

As is common in the art, the controller core 201 comprises a program memory 211 as well as instruction issue logic and functions for multi-context support. For each execution context, or thread, supported this includes a program counter, stack pointer and register file (not shown explicitly in figure 2). Typically, 2-3 threads are supported. This enables the use of a function called *fork,* which enables the core to perform certain instructions while, for example, a vector execution unit is executing a vector instruction. Therefore, it is not desired to have overlapping issue groups between the different threads. Hence, each thread preferably has its own set of vector execution units, to avoid a situation where two threads try to use the same vector execution unit at the same time. Typically, it is possible in the system to use the same vector execution unit in more than one thread, but if one thread attempts to send an issue signal to a vector execution unit that is already used by another thread an error message will be issued.

The controller core 201 also comprises an integer execution unit 212 comprising a register file RF, a core integer memory ICM, a multiplier unit MUL and an Arithmetic and Logic/Shift Unit (ALSU). These units are known in the art and are not shown in Figure 1.

An on-chip network 244 interconnects all units of the processor, including the controller core 201, the digital front end unit 209, the host interface unit 207, the vector execution units 203, 205, the memory banks 230, 232, the integer memory bank 238 and the accelerators 242.

In this example each of the first vector execution unit 203 and the second vector execution unit 205 are CMAC vector execution units, each comprising a vector controller 213, a vector load/store unit 215 and a number of data paths 217. The load function is used for fetching data from the other units connected to the on-chip network 244 (for example from a memory bank) and the store function is used for storing data from the execution units 203, 205 to for example a memory unit 230, 231 through the on-chip network 244. Data may also be obtained from other vector execution units and/or the computing results may be forwarded to other vector execution units for further processing. Each vector execution unit also comprises a vector controller 213, 223 arranged to receive instructions from the program memory 211.

The vector controller of this first vector execution unit is connected to the program memory 211 of the controller core 201 via the issue logic, to receive issue signals related to instructions from the program memory. In the description above, the issue logic decodes the instruction word to obtain the issue signal and sends this issue signal to the vector execution unit as a separate signal. It would also be possible to let the vector controller of the vector execution unit generate the issue signal locally. In this case, the issue signals are created by the vector controller based on the instruction word in the same way as it would be in the issue logic.

Alternatively, the vector execution units 203, 205 are CALU vector execution unit of a type known in the art, comprising a vector controller 223, a vector load/store unit 225 and a number of data paths 227. The vector controller 223 of this second vector execution unit is also connected to the program memory 211 of the controller core 201, via the issue logic, to receive issue signals related to instructions from the program memory.

The vector execution units 203, 205 could also be any kind of vector execution units. Although two vector execution units are shown and discussed, the inventive method can be extended to sending the same instruction to three or more vector execution units.

There could be an arbitrary number of vector execution units, in addition to the two shown in Figure 1. There may be only CMAC units, only CALU units or a suitable number of each type. There may also be other types of vector execution unit than CMAC and CALU. As explained above, a vector execution unit is a processor that is able to process vector instructions, which means that a single instruction performs the same function to a number of data units. Data may be complex or real, and are grouped into bytes or words and packed into a vector to be operated on by a vector execution unit. In this document, CALU and CMAC units are used as examples, but it should be noted that vector execution units may be used to perform any suitable function on vectors of data.

To enable several concurrent vector operations, the processor preferably has a distributed memory system where the memory is divided into several memory banks, represented in Figure 1 by Memory bank 0 230 to Memory bank N 231. Each memory bank 230, 231 has its own complex memory 232, 233 and, address generation unit AGU 234, 235 respectively. The PBBP of Fig. 1 also includes one or more integer memory banks 238, including a memory 239 and an address generation unit 240.

As is known in the art, a number of accelerators 242 are typically connected, since they enable efficient implementation of certain baseband functions such as channel coding and interleaving. Such accelerators are well known in the art and will not be discussed in any detail here. The accelerators may be configurable to be reused by many different standards.

The first and second vector execution unit 203, 205 are shown as a four-way CMAC units with four complex datapaths that may be run concurrently or separately. The four complex data paths include multipliers, adders, and accumulator registers (all not shown in Figure 1). Thus, in this embodiment, CMAC 203 may be referred to as a four-way CMAC datapath. In addition to multiplying and adding, CMAC 203 may also perform rounding and scaling operations and support saturation as is known in the art.

In one embodiment, the instruction set architecture for processor core 201 may include three classes of compound instructions. The first class of instructions are RISC instructions, which operate on 16-bit integer operands. The RISC-instruction class includes most of the control-oriented instructions and may be executed within integer execution unit 212 of the processor core 201. The next class of instructions are DSP instructions, which operate on complex- valued data having a real portion and an imaginary portion. The DSP instructions may be executed on one or more of the vector execution units 203, 205. The third class of instructions are the Vector instructions. Vector instructions may be considered extensions of the DSP instructions since they operate on large data sets and may utilize advanced addressing modes and vector support. The vector instructions may operate on complex or real data types.

In the prior art, the CMAC units 203, 205 are arranged to operate separately, each processing one instruction, on one set of data, at a time. According to the invention, control means are included which will enable the CMAC units 203, 205 to work concurrently on the same set of data in order to speed up the processing.

For illustration, in the prior art each vector execution unit has a name. The command 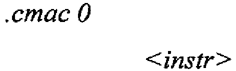 means that all the following CMAC instructions should be sent to CMAC unit number 0. This information is found in the instructions themselves and is decoded either in the issue logic in the core 201, or by the vector execution units themselves.

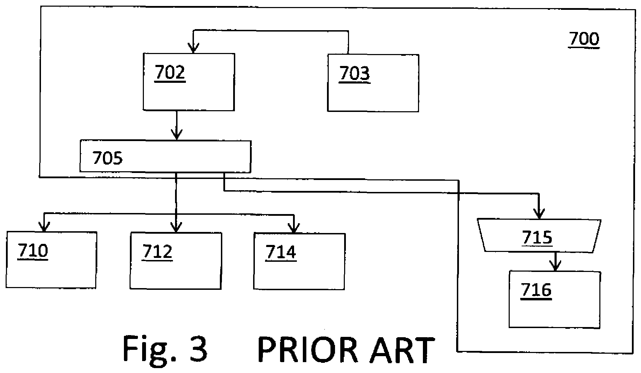

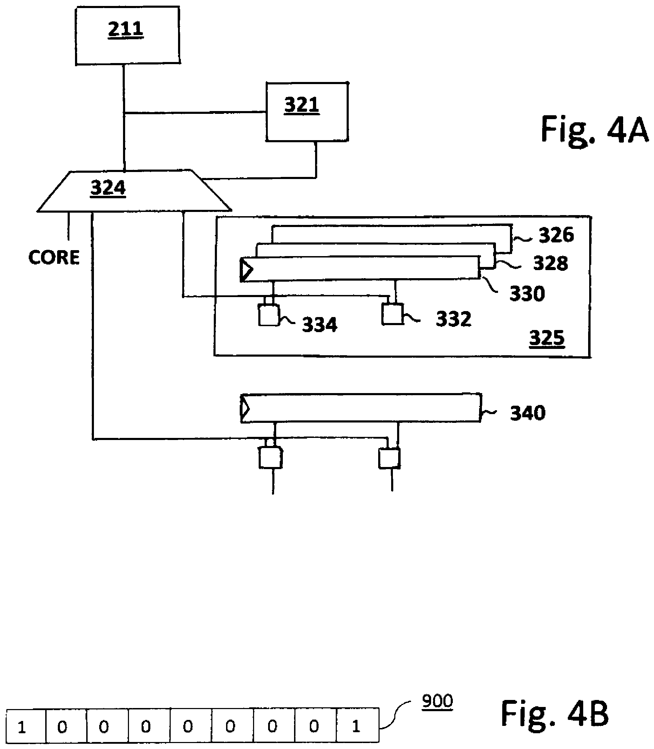

According to the invention, groups of execution units, called issue groups, are specified, each issue group comprising one or more execution units of the same type or of different types. When an instruction is issued, the unit field in the instruction word will not encode one of the execution units directly, but will instead indicate one of the issue groups, as will be discussed in connection with Figures 4A and 4B. Information about which execution units are included in each issue group may be held in any suitable unit, for example in a dedicated memory in the processor core 201 such as the issue logic unit 705 of Fig. 3. This will be discussed in more detail in connection with Figures 4A and 4B. An issue group can be indicated in an instruction in the same way as a single vector execution unit in the prior art.

According to the invention a new command is defined to say that all instructions of a particular type should be sent to a particular issue group, and not to an individual vector execution unit. If the following commands have been issued: 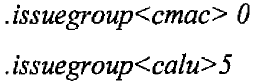 this means that all cmac instructions should be sent to issue group number 0 and all calu instructions should be sent to issue group number 5. If a cmac instruction such as *cacc x,y* is issued it will be sent to issue group number 0. If a calu instruction such as *vadd z,* b is issued, it will be sent to issue group number 5. The vector execution units in one issue group may have the same number of datapaths, or different numbers of datapaths.

Figure 2 shows an example of an instruction format. In this example an issue group called issue group 0 is indicated by the issue group encoding 0 0 1. In the example shown in Figure 2, the integer execution unit has its own entry and is not included in any issue group. It would also be possible to define an issue group, for example, issue group number 0 to include the integer execution unit. In this alternative example, an issue group would be used to process integer instructions. In the example of Figure 2, using three bits for the issue group number, eight different issue groups may be specified. If a larger number of issue groups are desired, the number of bits used to indicate issue groups must be increased accordingly. The letter x in the Figure indicates a data item.

As explained in connection with Figure 1 above, the core normally supports two or more threads, or contexts. As in the case when individual vector execution units are used, it is undesirable to involve the same functional unit in two or more threads because there is a risk of conflict. Preferably, therefore, an additional bit is added to the issue field in Figure 2, to indicate which thread, or context, the issue group may be used with.

Figure 3 illustrates the instruction issue logic in a prior art baseband processor 700 that may be used as a starting point for the present invention. The baseband processor comprises a core 701 having a program memory PM 702 holding instructions for the various execution units of the processor, and a program flow control unit 703. The program flow control unit 703 is arranged to point out the next address from which an instruction should be read in the program memory 702. From the program memory 702, instructions are fetched to an issue logic unit 705, which is common to all execution units and arranged to control where to send each specific instruction. The issue logic unit 705 is connected in this case to a number of vector execution units 710, 712, 714 and through a multiplexer 715 to an integer execution unit 716. As explained above, in one embodiment the instruction words, comprising the actual instructions, are sent to all execution units, whereas the issue signal corresponding to a particular instruction is sent only to the execution unit that is to execute this instruction. In an alternative embodiment the issue signal is handled locally by each vector execution unit.

Figure 4A illustrates an example of an issue control unit, corresponding to the unit 705 of Fig. 3, according to the invention. As before, the core comprises a program memory 211 holding instructions for vector execution units. A pre-decode unit 321 is arranged to determine which execution unit should receive each instruction being read from the program memory. The instruction word is sent directly from the program memory 211 to all the execution units. This is not shown in Fig. 4A, which only shows the control signals. The issue signal, which carries the information about which functional unit or units should perform the instruction, is sent through a demultiplexer 324. The issue signal may be sent to the integer execution unit in the core, as is shown by the arrow marked CORE from the demultiplexer. Alternatively, the issue signal may be intended for an issue group. In this case, the issue signal may be sent as it is to all functional units in this issue group.

In a preferred embodiment, however, to provide more flexibility, a mask may be used in connection with the issue signal, as shown in Fig. 4A. In this case, a number of mask units 326, 328, 330 are arranged, one for each issue group. A logical operator unit 332, 334 receives the issue signal intended for an issue group from the demultiplexer 324. This logical operator unit 332, 334 also receives information from the mask unit 326, 328, 330 corresponding to this issue group and determines which functional units in the issue group should receive the instruction. The function of the mask unit will be discussed in more detail in the following. When the logical operator unit has determined, based on the issue signal and the information from the mask, which functional unit or units should perform the instruction, the issue signal is sent to these vector execution units. In this way, the functional units included in an issue group may be varied dynamically instead of being hard coded in the system during configuration.

Figure 4B shows an example of mask unit 325 according to the above embodiment. The mask unit comprises a mask identifying the vector execution units in a group of vector execution units that should actually receive the instruction. In practice, the mask has one bit for each vector execution unit, which may be set to 0 or 1, to indicate if the vector execution unit should be included in the issue group or not. This information is combined with the information held in the issue signal to determine which vector execution units are to receive the instruction.

In this example, the mask units 326, 328, 330 are all used for the same issue group. As indicated by a further mask unit 340, there may be mask units for one of more further issue groups as well. The main purpose of having multiple mask register for one issue group is to allow each context to have its own separate mask register.

In the example in Figure 4B, nine vector execution units are potentially included in the issue group. The information stored in the filter unit indicates that the first and the last of these execution units should actually participate in executing the instruction. As will be understood from the above, issue groups can be defined without the mask unit, but the mask unit enables the dynamic definition of issue groups within pre-defined groups of execution units.

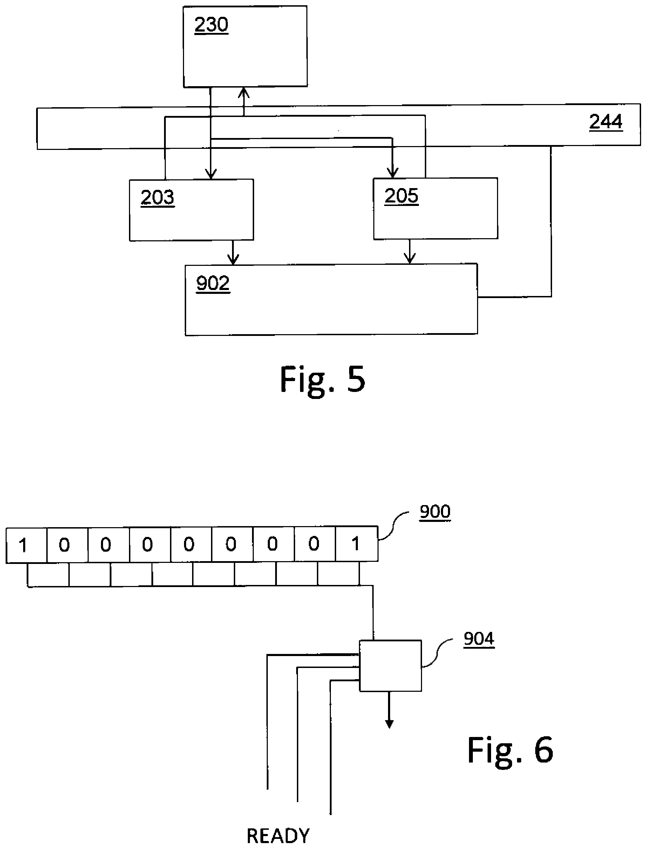

Figure 5 illustrates how a memory unit 230 may be accessed concurrently from both CMAC units 203, 205 in a particular issue group. As shown by the forked arrow pointing from the memory 230 to both CMAC units 203, 205, data may be read from the memory 230 to both CMAC units 203, 205 or written to the memory from both CMAC units 203, 205. The joint arrow from the CMAC units 203, 205 to the memory unit 230 illustrates that control signals from the CMAC units may be sent to the same control input of the memory unit 230. Both CMAC units 203, 205 can receive the same data from the memory unit at the same time. For writing to the memory unit, naturally, they must take turns. This can be arranged in a number of ways, known to the skilled person. Of course, the CMAC units 203, 205 are only an example; they could be any execution units. And the split and joint connections are really implemented in the on-chip network 244, which enables connections between all units in the processor.

Figure 5 also includes a vector register unit 902 which may be arranged to receive and combine the results of both or all execution units in an issue group. The vector register unit 902 is also connected directly to the on-chip network 244 to enable exchange of data with all other units in the processor. If a vector register unit is arranged it will perform the epilog. The epilog would involve combining the results in the desired way, for example by adding them together.

The issue group functions are particularly useful in situations where it is important that both CMAC units start at exactly the same time and work in a synchronized manner. Typically the multi-issue functions are used to enable several vector execution units to execute the same instruction, that is, when it is desired to transmit the same instruction to several vector execution units. This applies both to situations where synchronization of the execution is important and where several vector execution units should receive the same instructions but it is not essential that they are synchronized. An example of the latter is the *clear* instruction which is used to clear a vector execution unit. To clear all vector execution units, an issue group could be defined as comprising all vector execution units and the instruction could be sent to this issue group.

The following example will be discussed on the basis of a SIMT DSP with an arbitrary number of execution units. For simplicity, all units are assumed in this example to be CMAC vector execution units, but in practice a digital signal processor will have units of different types.

In many base band processing algorithms and programs, the algorithm can be decomposed into a number of DSP tasks, each consisting of a "prolog", a vector operation and an "epilog". The prolog is mainly used to clear accumulators, set up addressing modes and pointers and similar, before the vector operation can be performed. When the vector operation has completed, the result of the vector operation may be further processed by code in the "epilog" part of the task. In SIMT processors, typically only one vector instruction is needed to perform the vector operation.

The typical layout of one DSP task according to the invention is exemplified by the following example task :
The code snippet in the example performs a complex dot-product calculation over 512 complex values and then store the result to memory again. The routine requires the following instructions to be fetched by the processor core.

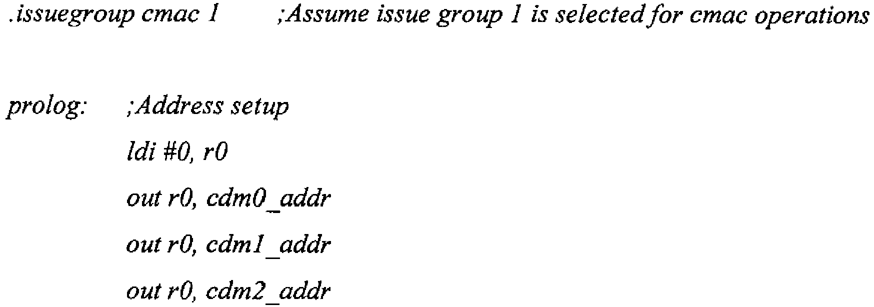

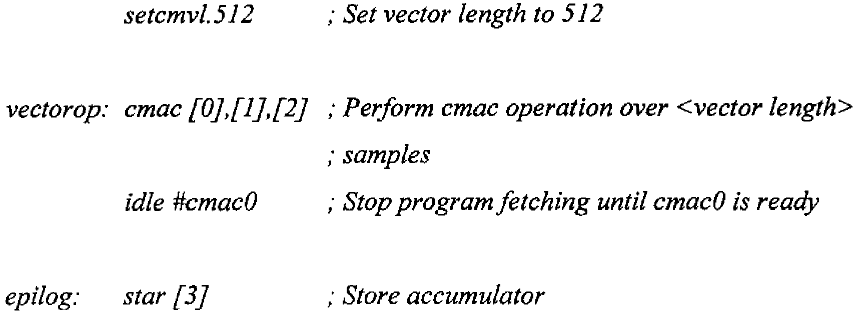

In the example above, the *setcmvl, cmac* and *star* instructions are issued to and executed on the CMAC vector execution unit whereas *Idi, out* and *idle* instructions are executed on the integer core ("core"). The parameter [3] to the star instruction indicates the indirect network port address of the unit to which the resulting data should be sent.

The vector length of the vector instructions indicates on how many data words (samples) the vector execution unit should operate on. The vector length may be set in any suitable way, for example one of the following:
1) By dedicated instructions, such as *setcmvl.123* in the example above
2) Carried in the instruction itself, for example according to the format: *cmac.123,* as shown in Fig. 4.
3) Set by a control register, for example according to the format *out r0, cmac_vector_length*

The instruction *idle #cmac0* instructs the core program flow controller to stop fetching new instructions until the CMAC0 unit has finished its vector operation. After the idle function releases, and allowing new instructions to be fetched, the "star" instruction is fetched and dispatched to the CMAC0 vector execution unit. The star instruction instructs the CMAC vector execution unit to store the accumulator to memory.

There are three possible ways of handling the output from the execution units of an issue group. The simplest and most common is that the execution units have worked separately on sets of data, and that each instruction, or sequence of instructions is ended individually. In this case, the result may be handled in a manner common in the art.

A second alternative is that the results from two or more execution units constituting an issue group should be handled together. One way of achieving this would be to provide a vector register file 902 as shown in Figure 5, arranged to receive the output from the entire issue group and to perform the epilog. The epilog would involve combining the results in the desired way, for example by adding them together.

A third option would be to let only one of the execution units perform the epilog. In this case, for all but one of the execution units in an issue group the last instruction would be for the execution unit to send its data to the one execution unit of the issue group that was to perform the final combining of the results.

In the example above, the parameters [0], [1], [2] in the instructions 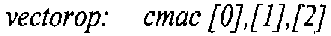 indicate the indirect network port addresses of the memories to be read from and written to, respectively, for the operation, assuming in this case that data are read from two memories and the result is written to one memory. Hence, the same memory information is given to all the vector execution units involved. Obviously it is normally not desirable for all vector execution units in the issue group involved to work on the same data. To solve this problem, each vector execution unit has a network port mapping table to translate the parameters [0], [1], [2] to exactly the network port this vector execution unit should read from or write to. Normally, each vector execution unit of an issue group will have a unique mapping table. As will be understood from Figure 5, the vector execution units may work on data from the same memory units, or from different memory units. For example, the two vector execution units 203, 205 could perform the functions Σx·y and Σx·z, respectively, x, y and z being vectors of data obtained from a first, a second and a third memory, respectively.

The idle instruction is used in the SIMT architecture to stop fetching instructions from the program memory until a particular vector execution unit is finished with its instruction. When a vector execution unit is finished it returns a signal to indicate to the core that it is ready. This signal might initiate an interrupt signal. When issue groups are used, preferably the idle instruction should stop the fetching of instructions until all vector execution units in the issue group is finished. Therefore, the core should handle ready signals from all vector execution units in the issue group in a coordinated manner. Typically, when the execution units in an issue group run the same instruction and no stalls occur in the execution units, all execution units within the same issue group should release their interrupt signal at the same time. To allow flexibility, it is possible to specify if "and" or "or" logic should be used to form the corresponding output signal. For example, the criterion may be that the ready signal has been received from all vector units, that is, all vector execution units in the issue group should be finished. Alternatively, the criterion may be that one of the vector units has issued the ready signal. A practical way of handling this is shown in Figure 6. A logical unit 904 is arranged to receive the ready signal from each of the vector execution units 0, 1, 2 in an issue group. The logical unit 904 also has information from the issue group mask 900 discussed in connection with Figure 3B and is arranged to perform a suitable logical function, for example, OR, AND or XOR to achieve the desired result.

## Claims

1. A digital signal processor (200) comprising:
- a processor core (201) including an integer execution unit (212) configured to execute integer instructions; and
- at least a first and a second vector execution unit (203, 205, 520, 530) separate from and coupled to the processor core (201) said vector execution units having a first and a second number of datapaths, respectively, each of said vector execution units being arranged to execute instructions, including vector instructions that are to be performed on multiple complex-valued data words in the form of a vector, and to return a signal when it is finished indicating to the core that it is ready, each instruction being comprised in an instruction word;
- at least a first memory unit (230, 231) comprising data to be worked on by the first and second vector execution unit (203, 205, 520, 530)
- An on-chip network interconnecting the processor core (201), the vector execution units (203, 205, 520, 530) and the at least one memory unit (230, 231),
- said digital signal processor comprising a program memory (211) arranged to hold instructions for the first and second vector execution unit (203, 205, 520, 530) and issue logic for issuing instructions, including vector instructions, to the first and second vector execution unit, said digital signal processor being **characterized in that** the processor comprises at least one control unit (705; 213, 223) for controlling, based on an issue signal extracted from an instruction word at least two execution units that are to receive and execute the instruction comprised in the instruction word at the same time, and logic for sending the instruction to said at least two execution units.

2. A processor according to claim 1, wherein a number of issue groups are defined, each issue group comprising at least one of the execution units (212, 203, 205), and at least one issue group comprising more than one of the execution unit, and the issue control unit (705) is arranged to select the at least two execution units by selecting an issue group.

3. A processor according to claim 1 or 2, wherein the issue control unit (705) further comprises at least one mask (900) associated with at least one issue group, said mask indicating which execution unit or units in the issue group should receive and execute the instruction.

4. A processor according to any one of the preceding claims, wherein an issue group may comprise at least one integer execution unit (212) and/or at least one vector execution unit (203, 205, 520, 530).

5. A processor according to any one of the preceding claims, wherein at least one execution unit comprises a mapping table for translating information held in an instruction indicating at least one other unit with which the execution should interact, for example, from which memory it should read data.

6. A processor according to any one of the preceding claims, wherein each vector execution unit comprises a vector controller arranged to determine if an instruction is a vector instruction and, if it is, inform a count register arranged to hold the vector length, said vector controllers being further arranged to control the execution of instructions.

7. A processor according to any one of the preceding claims, further comprising a vector register file unit (902), wherein the execution units of an issue group may be instructed to write the result of an execution of an instruction to the vector register file unit.

8. A processor according to any one of the preceding claims, wherein the instruction decoder (723) is arranged to inform the vector controller (720, 720') about the instruction being executed at any given time.

9. A processor according to claim 1, wherein the at least one execution unit (203, 205, 212) in an issue group is further arranged to receive an issue signal and to control the execution of instructions based on this issue signal.

10. A processor according to claim 1, wherein each vector execution unit is (203, 205, 520, 530) arranged to extract an issue signal from a received instruction word and determine whether it should participate in the execution of the instruction word based on the issue signal.

11. A baseband communication device suitable for multimode wired and wireless communication, comprising:
- a front-end unit (7) configured to transmit and/or receive communication signals;
- a programmable digital signal processor (3) coupled to the analog front-end unit, wherein the programmable digital signal processor is a digital signal processor according to any one of the claims 1 - 10.

12. A baseband communication device according to claim 11, wherein the front-end unit (7) is an analog front-end unit arranged to transmit and/or receive radio frequency or baseband signals.

13. A baseband communication device according to claim 11 or 12, said baseband communication device for communication in a wireless communications networks, such as a cellular communications network.

14. A baseband communication device according to claim 11, said baseband communication device being a television receiver.

15. A baseband communication device according to claim 11, said baseband communication device being a cable modem.

## Patentansprüche

1. Ein Digitaler Signalprozessor (200) mit:
- einem Prozessorkern (201), der eine Ganzzahl-Ausführungseinheit (212) enthält, die konfiguriert ist, um Integer-Befehle auszuführen; und
- mindestens einer erste und einer zweite Vektorausführungseinheit (203, 205, 520, 530), die von dem Prozessorkern (201) getrennt und mit diesem verbunden sind, wobei die Vektorausführungseinheiten jeweils eine erste und eine zweite Anzahl von Datenpfaden aufweisen, wobei jede Vektorausführungseinheit angeordnet ist, um Befehle auszuführen, inklusive Vektorbefehle, die auf mehreren komplexwertigen Datenwörtern in Form eines Vektors ausgeführt werden sollen, und um ein Signal zurückzugeben, wenn es fertig ist, um dem Kern anzuzeigen, dass es bereit ist, wobei der Befehl in einem Befehlswort enthalten ist;
- mindestens eine erste Speichereinheit (230, 231) mit Daten, die von der ersten und zweiten Vektorausführungseinheit (203, 205, 520, 530) bearbeitet werden sollen,
- einem On-Chip-Netzwerk, das den Prozessorkern (201), die Vektorausführungseinheiten (203, 205, 520, 530) und die mindestens eine Speichereinheit (230, 231) miteinander verbindet,
- wobei der digitale Signalprozessor einen Programmspeicher (211) aufweist, der angeordnet ist, um Befehle für die erste und zweite Vektorausführungseinheit (203, 205, 520, 530) zu halten und eine Logik zum Ausgeben von Befehlen, inklusive Vektorbefehlen, an die erste und zweite Vektorausführung auszugeben, wobei der digitale Signalprozessor **dadurch gekennzeichnet ist, dass** der Prozessor mindestens eine Steuereinheit (705; 213, 223) umfasst, um basierend auf einem aus einem Befehlswort extrahierten Ausgabesignal mindestens zwei Ausführungseinheiten zu steuern, die den in dem Befehlswort enthaltenen Befehl zugleich empfangen und ausführen sollen, und eine Logik zum Senden von Befehlen an die mindestens zwei Ausführungseinheiten.

2. Ein Verfahren nach Anspruch 1, wobei eine Anzahl von Ausgabegruppen definiert sind, wobei jede Ausgabegruppe mindestens eine der Ausführungseinheiten (212, 203, 205) umfasst und mindestens eine Ausgabegruppe umfasst, die mehr als eine der Ausführungseinheiten aufweist, und wobei die Ausgabesteuereinheit (705) angeordnet ist, um die mindestens zwei Ausführungseinheiten auszuwählen, indem sie eine Ausgabegruppe auswählt.

3. Ein Verfahren nach Anspruch 1 oder 2, wobei die Ausgabesteuereinheit (705) ferner mindestens eine Maske (900) umfasst, die mindestens einer Ausgabegruppe zugeordnet ist, wobei die Maske anzeigt, welche Ausführungseinheit oder -einheiten in der Ausgabegruppe den Befehl empfangen und ausführen sollen.

4. Ein Verfahren nach einem der vorhergehenden Ansprüche, wobei eine Ausgabegruppe mindestens eine ganzzahlige Ausführungseinheit (212) und / oder mindestens eine Vektorausführungseinheit (203, 205, 520, 530) umfassen kann.

5. Ein Prozessor nach einem der vorhergehenden Ansprüche, wobei mindestens eine Ausführungseinheit eine Zuordnungstabelle umfasst, die angeordnet ist, um Informationen zu übersetzen, die in einem Befehl gehalten sind, welcher Befehl mindestens eine andere Einheit angibt, mit der die Ausführung interagieren sollte, zum Beispiel aus welchem Speicher sie Daten lesen sollte.

6. Ein Prozessor nach einem der vorhergehenden Ansprüche, bei dem jede Vektorausführungseinheit einen Vektorcontroller aufweist, der angeordnet ist, um zu bestimmen, ob ein Befehl ein Vektorbefehl ist, und wenn es der Fall ist, ein Zählregister informieren, welches Zählregister angeordnet ist, um die Vektorlänge zu halten, wobei die Vektorcontrollern ferner angeordnet ist, um die Ausführung von Befehlen zu steuern.

7. Ein Prozessor nach einem der vorhergehenden Ansprüche, ferner mit einer Vektorregisterdateieinheit (902), wobei die Ausführungseinheiten einer Ausgabegruppe angewiesen werden können, das Ergebnis einer Ausführung eines Befehls an die Vektorregisterdateieinheit zu schreiben.

8. Ein Prozessor nach einem der vorhergehenden Ansprüche, wobei der Befehlsdecodierer (723) eingerichtet ist, den Vektorcontroller (720, 720 ') über den Befehl zu informieren, der zu irgendeiner gegebenen Zeit ausgeführt wird.

9. Ein Prozessor nach Anspruch 1, wobei die mindestens eine Ausführungseinheit (203, 205, 212) in einer Ausgabegruppe ferner eingerichtet ist, um ein Ausgabesignal zu empfangen und die Ausführung von Befehlen basierend auf diesem Ausgabesignal zu steuern.

10. Ein Prozessor nach Anspruch 1, wobei jede Vektorausführungseinheit (203, 205, 520, 530) angeordnet ist, um ein Ausgabesignal aus einem empfangenen Befehlswort zu extrahieren und zu bestimmen, ob es in der Ausführung des Befehlswortes basierend auf dem Ausgabesignal teilnehmen soll.

11. Eine Basisband-Kommunikationsvorrichtung, die für eine drahtgebundene und drahtlose Kommunikation mit Multimode geeignet ist, mit:
- einer Front-End-Einheit (7), die konfiguriert ist, um Kommunikationssignale zu senden und / oder zu empfangen;
- einen programmierbaren digitalen Signalprozessor (3), der mit der analogen Front-End-Einheit gekoppelt ist, wobei der programmierbare digitale Signalprozessor ein digitaler Signalprozessor nach einem der Ansprüche 1 bis 10 ist.

12. Eine Basisband-Kommunikationsvorrichtung nach Anspruch 11, wobei die Front-End-Einheit (7) eine analoge Front-End-Einheit ist, die angeordnet ist, um Hochfrequenz- oder Basisbandsignale zu senden und / oder zu empfangen.

13. Eine Basisband-Kommunikationsvorrichtung nach Anspruch 11 oder 12, wobei die Basisband-Kommunikationsvorrichtung zur Kommunikation in einem drahtlosen Kommunikationsnetzwerk ist, wie beispielsweise einem zellularen Kommunikationsnetzwerk.

14. Eine Basisband-Kommunikationsvorrichtung nach Anspruch 11, wobei die Basisband-Kommunikationsvorrichtung ein Fernsehempfänger ist.

15. Eine Basisband-Kommunikationsvorrichtung nach Anspruch 11, wobei die Basisband-Kommunikationsvorrichtung ein Kabelmodem ist.

## Revendications

1. Un processeur de signal numérique (200) comprenant:
- un noyau de processeur (201) comprenant une unité d'exécution d'entiers (212) configurée pour exécuter des instructions d'entier; et
- au moins une première et une deuxième unité d'exécution de vecteur (203, 205, 520, 530) séparées et couplées au noyau de processeur (201), lesdites unités d'exécution de vecteur ayant respectivement un premier et un deuxième nombre de trajets de données, chacun desdits unités d'exécution vectorielles étant agencées pour exécuter des instructions, y compris des instructions vectorielles devant être exécutées sur plusieurs mots de données à valeurs complexes sous la forme d'un vecteur, et pour renvoyer un signal lorsqu'il est terminé indiquant au noyau qu'il est prêt, chaque instruction étant comprise dans un mot d'instruction;
- au moins une première unité de mémoire (230, 231) comprenant des données à traiter par les première et deuxième unités d'exécution de vecteur (203, 205, 520, 530)
- un réseau sur puce interconnectant le noyau de processeur (201), les unités d'exécution de vecteur (203, 205, 520, 530) et la au moins une unité de mémoire (230, 231),
- ledit processeur de signal numérique comprenant une mémoire de programme (211) agencée pour maintenir des instructions pour la première et la deuxième unité d'exécution de vecteur (203, 205, 520, 530) et émettre une logique pour émettre des instructions, y compris des instructions vectorielles, aux premières et secondes unités d'exécution de vecteur, ledit processeur de signal numérique étant **caractérisé en ce que** le processeur comprend au moins une unité de commande (705; 213, 223) pour commander, sur la base d'un signal d'émission extrait d'un mot d'instruction, au moins deux unités d'exécution destinées à recevoir et exécuter l'instruction comprise dans le mot d'instruction en même temps, et la logique pour envoyer l'instruction auxdites au moins deux unités d'exécution.

2. Un processeur selon la revendication 1, dans lequel un certain nombre de groupes d'émission sont définis, chaque groupe d'émission comprenant au moins une des unités d'exécution (212, 203, 205), et au moins un groupe d'émission comprenant plus d'un des unités d'exécution, et l'unité de commande d'émission (705) est agencé pour sélectionner les au moins deux unités d'exécution en sélectionnant un groupe d'émission.

3. Un processeur selon la revendication 1 ou 2, dans lequel l'unité de commande d'émission (705) comprend en outre au moins un masque (900) associé à au moins un groupe d'émission, ledit masque indiquant quelle unité ou unités d'exécution dans le groupe d'émission doit recevoir et exécuter l'instruction.

4. Un processeur selon l'une quelconque des revendications précédentes, dans lequel un groupe d'émission peut comprendre au moins une unité d'exécution d'entiers (212) et / ou au moins une unité d'exécution de vecteurs (203, 205, 520, 530).

5. Un processeur selon l'une quelconque des revendications précédentes, dans lequel au moins une unité d'exécution comprend une table de mappage pour traduire l'information contenue dans une instruction indiquant au moins une autre unité avec laquelle l'exécution doit interagir, par exemple à partir de quelle mémoire il doit lire les données.

6. Un processeur selon l'une quelconque des revendications précédentes, dans lequel chaque unité d'exécution de vecteur comprend un contrôleur de vecteur agencé pour déterminer si une instruction est une instruction de vecteur et, si c'est le cas, informer un registre de comptage agencé pour maintenir la longueur de vecteur, lesdits contrôleurs de vecteur étant en outre agencé pour commander l'exécution d'instructions.

7. Un processeur selon l'une quelconque des revendications précédentes, comprenant en outre une unité de fichier de registre vectoriel (902), les unités d'exécution d'un groupe d'émission pouvant être chargées d'écrire le résultat de l'exécution d'une instruction dans l'unité de fichier de registre vectoriel.

8. Un processeur selon l'une quelconque des revendications précédentes, dans lequel le décodeur d'instructions (723) est agencé pour informer le contrôleur de vecteur (720, 720') autour de l'instruction exécutée à tout moment.

9. Un processeur selon la revendication 1, dans lequel au moins une unité d'exécution (203, 205, 212) dans un groupe d'émission est en outre agencée pour recevoir un signal d'émission et pour commander l'exécution d'instructions sur la base de ce signal d'émission.

10. Un processeur selon la revendication 1, dans lequel chaque unité d'exécution de vecteur est agencée (203, 205, 520, 530) pour extraire un signal d'émission d'un mot d'instruction reçu et déterminer s'il doit participer à l'exécution du mot d'instruction sur la base du signal d'émission.

11. Un dispositif de communication en bande de base adapté pour une communication multimode filaire et sans fil, comprenant :
- une unité frontale (7) configurée pour transmettre et / ou recevoir des signaux de communication;
- un processeur de signal numérique programmable (3) couplé à l'unité frontale analogique, le processeur de signal numérique programmable étant un processeur de signal numérique selon l'une quelconque des revendications 1 à 10.

12. Un dispositif de communication en bande de base selon la revendication 11, dans lequel l'unité frontale (7) est une unité frontale analogique agencée pour transmettre et / ou recevoir des signaux de fréquence radio ou de bande de base.

13. Un dispositif de communication en bande de base selon la revendication 11 ou 12, ledit dispositif de communication en bande de base étant pour la communication dans un réseau de communication sans fil, tel qu'un réseau de communication cellulaire.

14. Un dispositif de communication en bande de base selon la revendication 11, ledit dispositif de communication en bande de base étant un récepteur de télévision.

15. Un dispositif de communication en bande de base selon la revendication 11, ledit dispositif de communication en bande de base étant un modem câble.
